# EUROPÄISCHE PATENTSCHRIFT

(11) **EP 2 092 209 B1**
(45) Veröffentlichungstag und Bekanntmachung des Hinweises auf die Patenterteilung: **10.08.2011**
(21) Anmeldenummer: 07822435.9
(22) Anmeldetag: 09.11.2007
(51) Int. Cl.: F16F 1/38

(54) **RUNDLAGER**
ROUND BEARING
PALIER CIRCULAIRE

(30) Priorität: 16.11.2006 EP 06124213
(43) Veröffentlichungstag der Anmeldung: 26.08.2009
(73) Patentinhaber: BASF SE, 67056 Ludwigshafen (DE)
(72) Erfinder: WULF, Andreas, 49406 Barnstorf (DE); NIESTRAT, Falk Sören, 32130 Enger (DE); HORSTMANN, Andreas, 27232 Sulingen (DE)
(86) Internationale Anmeldenummer: PCT/EP2007/062146
(87) Internationale Veröffentlichungsnummer: WO 2008/058914

(56) Entgegenhaltungen:
- WO-A-92/13205
- DE-A1- 10 225 797
- GB-A- 2 370 338
- JP-A- 5 141 462
- JP-A- 9 257 072
- US-A1- 2003 108 380
- US-A1- 2005 242 480
- L. WOLTERS, ET AL.: 'Das Metallkleben', INSTITUT FÜR KUNSTOFFVERARBEITUNG IN INDUSTRIE UND HANDWERK AN DER RWTH AACHEN 1991 * Seite 1,2 und 8 *

## Beschreibung

Die Erfindung betrifft Verfahren zur Herstellung von bevorzugt zylindrischen Lagern, bevorzugt Rundlagern enthaltend (i) bevorzugt zylindrische Außenbuchse, (ii) bevorzugt zylindrisches bevorzugt elastisches Lagerelement auf der Basis von zelligen Polyisocyanat-Polyadditionsprodukten und (iii) hohle bevorzugt zylindrische Innenbuchse, wobei man die Außenbuchse mittels Angiessen oder Anspritzen eines reaktiven Polyurethansystems herstellt und haftend mit dem Lagerelement verbindet. Des Weiteren bezieht sich die Erfindung auf derart erhältliche Lager sowie Automobile oder Lastkraftwagen enthaltend die erfindungsgemäßen Rundlager.

Rundlager werden in Automobilen innerhalb des Fahrwerks verwendet und sind allgemein bekannt. Mit Hilfe von Rundlagern werden im Automobil Aggregate, Fahrwerksbauteile u. a. untereinander oder mit der Karosserie verbunden. Dabei erfüllen sie durch die Verwendung von Elastomerwerkstoffen die Funktion der elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z. B. die Anbindung der Stossdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom intrinsischen Dämpfungsvermögen des eingesetzten Elastomerwerkstoffes. Derartige Rundlager sind beschrieben in WO 03/104677, WO 03/104345, WO 03/104326 und DE-A-10225797.

Besondere Anforderungen bestehen weiterhin in der Entwicklung eines möglichst wirtschaftlichen Herstellverfahrens, das es ermöglicht, sicher, flexibel und schnell eine möglichst breite Vielfalt unterschiedlicher Rundlager zu fertigen.

Aufgabe der vorliegenden Erfindung war es somit, ein Verfahren zur Herstellung von bevorzugt zylindrischen Lagern, bevorzugt Rundlagern, enthaltend (i) bevorzugt zylindrische Außenbuchse, (ii) bevorzugt zylindrisches bevorzugt elastisches Lagerelement auf der Basis von zelligen Polyisocyanat-Polyadditionsprodukten und (iii) hohle bevorzugt zylindrische Innenbuchse zu entwickeln, mit denen die genannten Probleme und Anforderungen gelöst werden. Insbesondere sollte das Verfahren geeignet sein, losgelöst von der Herstellung des Lagerelementes, Rundlager auf der Basis einer differentiellen Bauweise herzustellen.

Diese Aufgaben konnten dadurch gelöst werden, dass man die Außenbuchse mittels Angiessen oder Anspritzen eines reaktiven Polyurethansystems herstellt und haftend mit dem Lagerelement verbindet.

Die vorliegende Erfindung zeichnet sich dadurch aus, dass die Außenbuchse mittels eines reaktiven Polyurethansystems, das mittels der allgemein bekannten RIM-Technik (Reaction Injection Moulding) oder als klassisches Giessystem verarbeitet werden kann, hergestellt wird. Dies bietet den Vorteil, dass für die Außenbuchse eine große Gestaltungsfreiheit besteht und dass keine Haftvermittler wie für die Verwendung metallener Außenbuchsenwerkstoffen verwendet werden müssen. Weiterhin ist durch die differentielle Bauweise eine Qualitätssicherung im frühen Stadium des Montageprozesses möglich. Außerdem ist durch den verhältnismäßig niedrigen Druck beim Befüllen der Form die Verformung des Cellasto sehr gering. Weiterhin kann gleichzeitig die Verklebung mit dem Kern oder einer weiteren Außenschale erfolgen.

Das erfindungsgemäße Verfahren erfolgt bevorzugt derart, dass man das Lagerelement (ii) in Kontakt mit der Innenbuchse herstellt, bevorzugt verschäumt und haftend verbindet und anschließend die Außenbuchse (i) mit dem reaktiven Polyurethansystem herstellt. Alternativ ist es in einer weiteren bevorzugten Ausführungsform möglich, dass man die Innenbuchse (iii) in dem Lagerelement (ii) platziert und haftend verbindet, bevorzugt verklebt, und anschließend die Außenbuchse (i) mit dem reaktiven Polyurethansystem herstellt. Weiterhin können die Verbindung des Kerns mit dem Lagerelement und die Herstellung der Außenbuchse gleichzeitig erfolgen. D. h. bevorzugt ist ferner ein Verfahren, bei dem man durch das Angiessen oder Anspritzen des reaktiven Polyurethansystems die Außenschale (i) herstellt und in dem gleichen Arbeitsgang das Lagerelement (ii) haftend mit der Innenbuchse (iii) verbindet.

Geeignete reaktive Polyurethansysteme, die als Giessysteme oder mittels RIM-Technik zur Außenbuchse verarbeitet werden können, sind allgemein bekannt und kommerziell erhältlich. Bevorzugt wird man die Außenbuchse mittels Reaction Injection Moulding (RIM) herstellen.

Bevorzugt setzt man faserverstärkte reaktive Polyurethansysteme ein, bevorzugt solche, die mit Glasfasern, Kohlefasern oder Aramidfasern, besonders bevorzugt mit Glasfasern verstärkt sind.

Bevorzugt wird man das Lagerelement (ii) in Kontakt mit der Innenbuchse herstellen, bevorzugt verschäumen und haftend verbinden und anschließend die Außenbuchse (i) in Kontakt mit dem Lagerelement (ii) herstellen. Alternativ kann man die Innenbuchse (iii) in dem Lagerelement (ii) platzieren und haftend verbinden, bevorzugt verkleben, und anschließend die Außenbuchse (i) in Kontakt mit dem Lagerelement (ii) herstellen. Bevorzugt ist die Außenbuchse haftend mit dem Lagerelement (ii) verbunden.

Zusätzlich zum Lagerelement (ii) kann in dem erfindungsgemäßen Lager mindestens ein weiteres Lager zwischen Innenbuchse und Außenbuchse vorliegen. Bei diesem zusätzlichen Lager (vi) handelt es sich bevorzugt um ein elastisches Material. Das zusätzliche Lager dient als zusätzlicher Funktionswerkstoff dazu, die Steifigkeit des Lagers in unterschiedliche radiale Richtungen gezielt einzustellen. Aus diesem Grund kommt das zusätzliche Lager bevorzugt nicht über den gesamten Umfang des Lagers zum Einsatz. Bevorzugt weist das Lagerelement (iv) eine andere Federcharakteristik als das Lagerelement (ii) auf. Dies kann dadurch erreicht werden, das ein grundsätzlich unterschiedliches Material eingesetzt wird oder aber beispielsweise die Dichte im Vergleich zum anderen Lagerelement (ii) variiert wird. Bevorzugt ist das Lagerelement (ii) haftend mit mindestens einem, besonders bevorzugt zwei weiteren elastischen Lagerelementen (iv) verbunden. Bevorzugt ist das Lagerelement (iv) zwischen der Außenbuchse (i) und dem Lagerelement (ii) platziert. Das Lagerelement (iv) reicht axial bevorzugt über die gesamte Länge des Lagerelementes (ii). Bevorzugt wird das Lagerelement (ii) von dem Lagerelement dabei nicht vollständig umfasst.

Alternativ kann das Lagerelement (iv) zwischen der Innenbuchse (iii) und dem Lagerelement (ii) platziert sein, axial über die gesamte Länge des Lagerelementes (ii) reichen und die Innenbuchse (iii) nicht vollständig umfassen. Besonders bevorzugt ist das Lagerelement (iv) in mindestens einer, bevorzugt 2 Nut(en), die sich bevorzugt gegenüberliegen, des Lagerelementes (ii) angeordnet.

Das Lagerelement (iv) kann man bevorzugt mittels Spritzguss in Kontakt mit dem Lagerelement (ii) herstellen. Besonders bevorzugt wird man dabei thermoplastisches Polyurethan einsetzen, bevorzugt mit einer Härte zwischen 50 und 70 Shore A. Das Spritzgießen von thermoplastischem Polyurethan sowie das thermoplastische Polyurethan selbst ist allgemein bekannt.

Alternativ kann man das Lagerelement (iv) als Giesselastomer in Kontakt mit dem Lagerelement (ii) herstellen. Als Giesselastomer kommen dabei insbesondere allgemein bekannt Polyurethangiesselastomere in Betracht, die kommerziell erhältlich sind. Diese Giesselastomere weisen bevorzugt eine Härte zwischen 50 und 70 Shore A auf. Anschließend, nach Aushärten des Gießelastomers, kann man mittels Spritzguss die Auβenbuchse herstellen.

Die Außenbuchse weist bevorzugt eine Dicke zwischen 1 mm und 10 mm auf.

Die Oberfläche des Lagerelementes (ii) kann man zur Verbesserung der Haftung nach allgemein bekannten Verfahren vorbehandeln. Bevorzugt wird man die Oberfläche plasmabehandeln und anschließend das reaktive Polyurethansystem an die vorbehandelte Oberfläche des Lagerelementes angiessen oder anspritzen. Alternativ und ebenfalls bevorzugt ist es möglich, die Oberfläche des Lagerelementes (ii) mechanisch vorzubehandeln und anschließend das reaktive Polyurethansystem an die vorbehandelte Oberfläche des Lagerelementes anzugiessen oder anzuspritzen.

Die Innenbuchse (iii) kann auf üblichen Materialien basieren, beispielsweise Metallen, z. B. Stahl, Eisen und/oder Aluminium oder harten Kunststoffen, z. B. TPU. Die Innenbuchse (iii) verfügt über eine Innenbohrung üblicherweise zur Aufnahme eines Befestigungsbolzen. Der Außendurchmesser ergibt sich aus Festigkeitsgründen. Bevorzugt basiert die Innenbuchse auf Metall.

Das erfindungsgemäße Lagerelement (ii) basiert bevorzugt auf Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können, bevorzugt zelligen Polyurethanelastomeren, bevorzugt mit einer Dichte nach DIN EN ISO 845 zwischen 200 und 800 kg/m³, bevorzugt zwischen 300 und 600 kg/m³, einer Zugfestigkeit nach DIN EN ISO 1798 von ≥ 2,0 N/mm², bevorzugt ≥ 2,5 N/mm², besonders bevorzugt zwischen 2,5 bis 8 N/mm², einer Bruchdehnung nach DIN EN ISO 1798 von ≥ 200 %, bevorzugt ≥ 350 % und einer Weiterreißfestigkeit nach DIN ISO 34-1 B, b von ≥ 8 N/mm, bevorzugt 8 bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 062 835, EP-A 036 994, EP-A 250 969, DE-A 195 48 770 und DE-A 195 48 771. Die Herstellung erfolgt üblicherweise durch Umsetzung von Isocyanaten mit gegenüber Isocyanaten reaktiven Verbindungen. Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
- (a): Isocyanat,
- (b): gegenüber Isocyanaten reaktiven Verbindungen,
- (c): Wasser und gegebenenfalls
- (d): Katalysatoren,
- (e): Treibmittel und/oder
- (f): Hilfs- und/oder Zusatzstoffe, beispielsweise Polysiloxane und/oder Fettsäuresulfonate.

Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80 °C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird. Das Lagerelement (ii) ist bevorzugt haftend mit der Außenbuchse (i) und/oder der Innenbuchse (iii) verbunden. Unter dem Ausdruck "haftend verbunden" ist insbesondere zu verstehen, dass das Lagerelement (ii) mit der Innenbuchse (iii) beispielsweise mit allgemein üblichen Klebstoffen verklebt oder direkt auf der Innenbuchse (iii) aufgeschäumt ist.

Das Lagerelement (ii) sowie gegebenenfalls (iv) sind zwischen Innenbuchse (iii) und Außenbuchse (i) angeordnet. Bevorzugt sind die Einzelelemente Außenbuchse, Lagerelement und Innenbuchse haftend miteinander verbunden.

Die Abmessungen von Innenbuchse, Lagerelementen und Außenbuchse können weitgehend beliebig gewählt werden und sich bevorzugt nach den Abmessungen bekannter Rundlager richten. Die Länge des Rundlagers und der Gesamtdurchmesser sowie der Durchmesser des Hohlraums der Innenbuchse (i) können sich nach dem Einsatz und den zu lagernden Objekten richten. Die Wahl geeigneter Abmessungen ist dem Fachmann geläufig. Die bevorzugten Abmessungen der Innenbuchse wurden eingangs dargestellt.

Die Innenbuchse (i) weist bevorzugt eine Höhe zwischen 30 mm und 100 mm, einen äußeren Durchmesser zwischen 20 mm und 80 mm sowie bevorzugt einen Durchmesser des Hohlraums zwischen 8 mm und 20 mm auf.

Als Objekte, die mittels des Rundlagers insbesondere mit der Karosserie eines Automobils oder eines Lastkraftwagens gelagert werden sollen, kommen beispielsweise alle Arten von Aggregaten, Fahrschemein, Lenkern, Getrieben und/oder Anbauteilen, bevorzugt Aggregate, Lenker und/oder Getriebe, besonders bevorzugt Hinterachsgetriebe in Frage.

Diese mit dem bevorzugt dämpfend wirkenden Rundlager zu lagernden Teile können beispielsweise dadurch mit den Rundlager befestigt werden, dass man sie mit Hilfe Schrauben-, Bolzen, Stift-, Niet- oder anderen form- oder kraftschlüssigen Verbindungen, bevorzugt Schrauben-, Bolzen, Stift-, Niet-Verbindungen befestigt, bevorzugt mit Hilfe der hohlen Innenbuchse.

Bevorzugt wird man entsprechend an der Innenbuchse (i) Aggregate, Lenker und/oder Getriebe, besonders bevorzugt Hinterachsgetriebe befestigen und somit bevorzugt mit der Karosserie eines Automobils oder eines Lastkraftwagens bevorzugt schwingungsdämpfend verbinden. Ebenso ist es denkbar, dass diese Lager beispielsweise in die Lagerschilde von Getrieben, Aggregaten eingebracht werden, die dann mit der Karosserie verbunden werden.

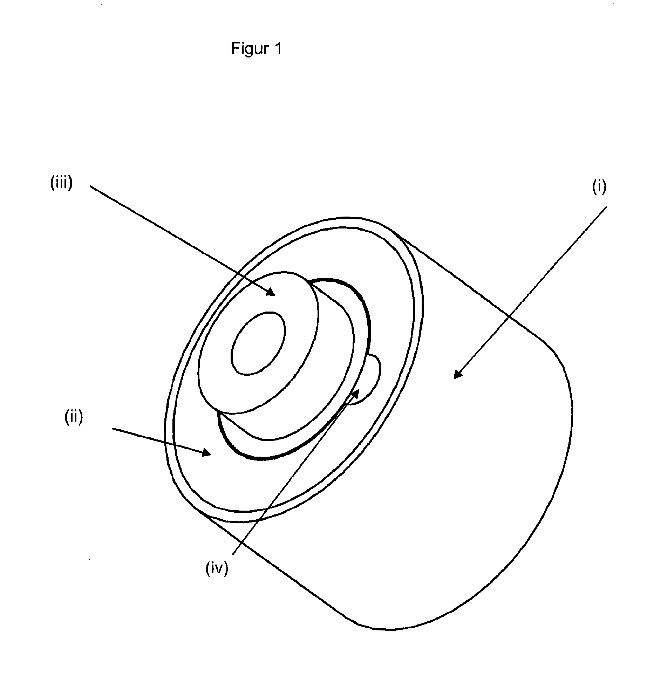

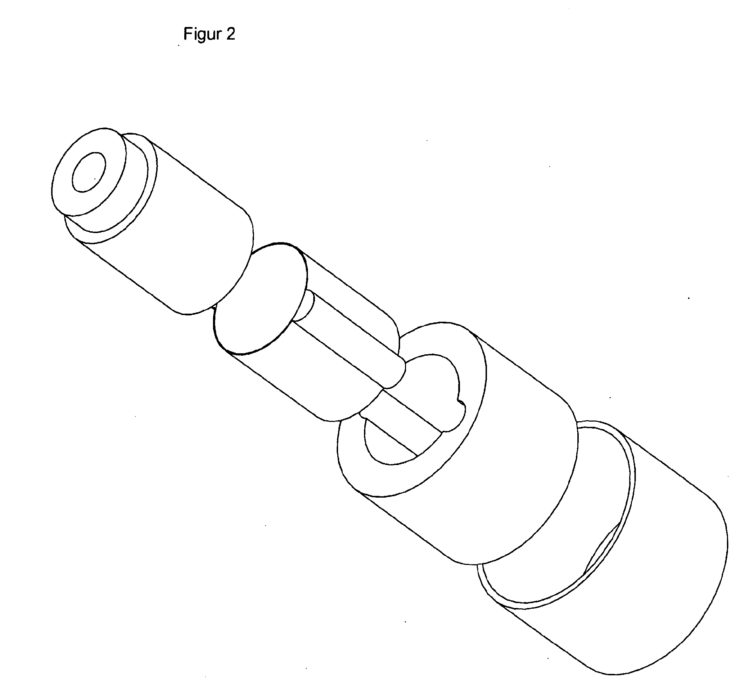

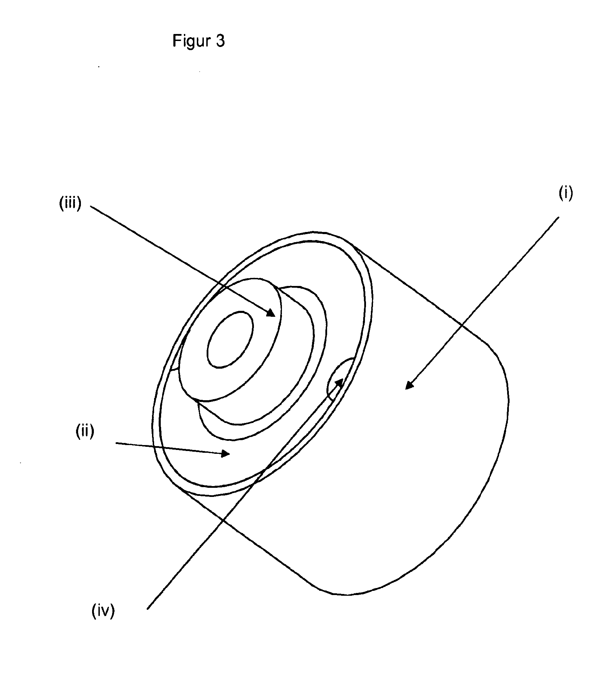

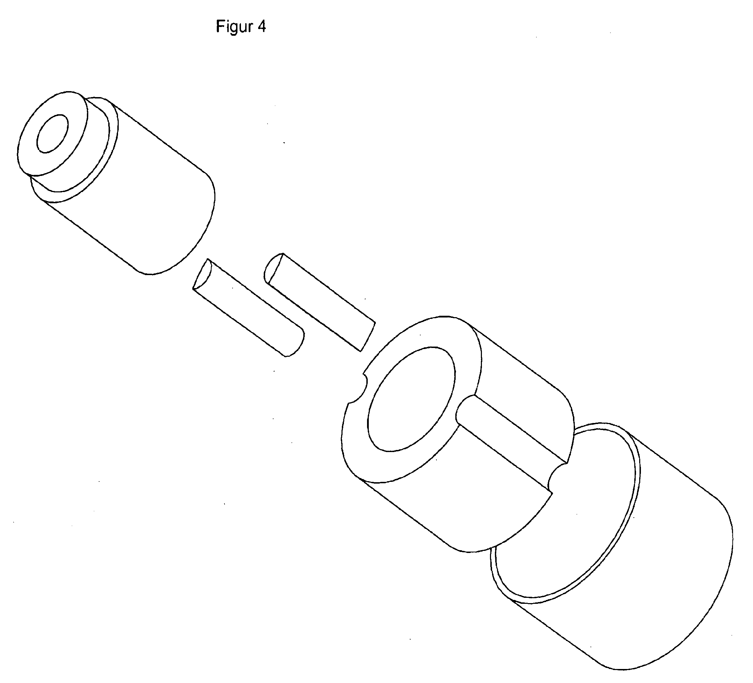

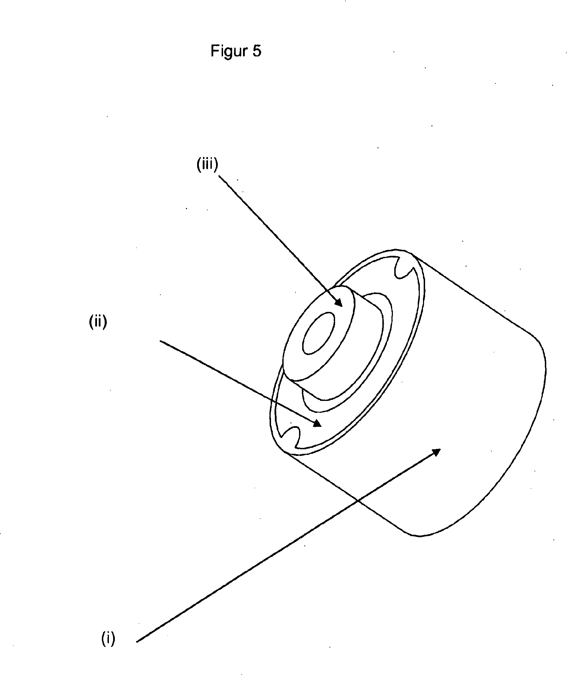

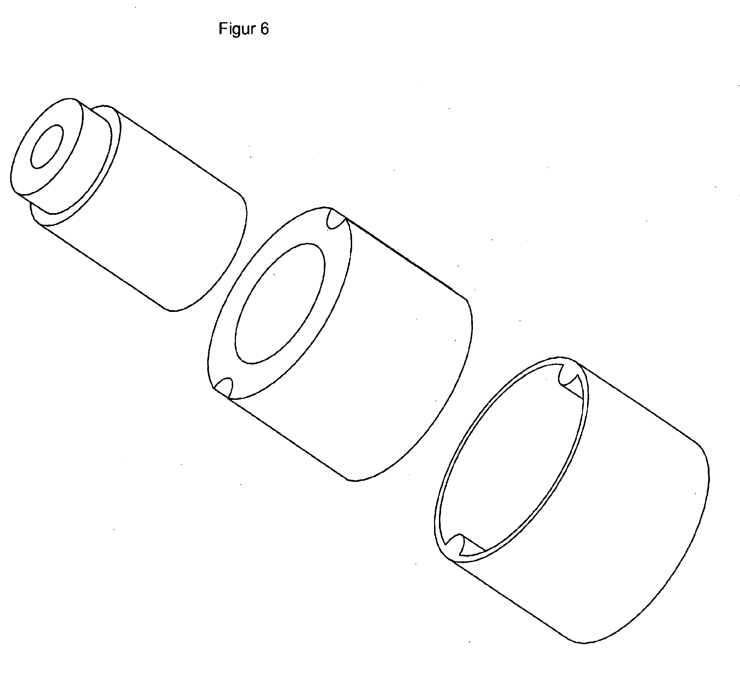

Ein erfindungsgemäßes Rundlager ist in den Figuren 1 bis 6 dargestellt. Dabei ist die Außenbuchse mit (i), die Innenbuchse mit (iii) sowie die Lagerelemente mit (ii) und (iv) gekennzeichnet. Zur besseren Übersicht ist das Rundlager teilweise in den Einzelteilen, d. h. demontiert, dargestellt.

## Patentansprüche

1. Verfahren zur Herstellung von Lagern enthaltend (i) Außenbuchse, (ii) Lagerelement auf der Basis von zelligen Polyisocyanat-Polyadditionsprodukten und (iii) hohle Innenbuchse, **dadurch gekennzeichnet, dass** man die Außenbuchse mittels Angiessen oder Anspritzen eines reaktiven Polyurethansystems herstellt und haftend mit dem Lagerelement verbindet.

2. Verfahren gemäß Anspruch 1, **dadurch gekennzeichnet, dass** man die Außenbuchse (i) mittels Reaction Injection Moulding (RIM) herstellt.

3. Verfahren gemäß Anspruch 1, **dadurch gekennzeichnet, dass** das reaktive Polyurethansystem faserverstärkt ist.

4. Verfahren gemäß Anspruch 1, **dadurch gekennzeichnet, dass** man das Lagerelement (ii) in Kontakt mit der Innenbuchse herstellt und anschließend die Auβenbuchse (i) in Kontakt mit dem Lagerelement (ii) herstellt.

5. Verfahren gemäß Anspruch 1, **dadurch gekennzeichnet, dass** man die Innenbuchse (iii) in dem Lagerelement (ii) platziert und mittels Reaction Injection Moulding (RIM) haftend verbindet und anschließend die Außenbuchse (i) in Kontakt mit dem Lagerelement (ii) herstellt.

6. Verfahren gemäß Anspruch 1, **dadurch gekennzeichnet, dass** man durch das Angiessen oder Anspritzen des reaktiven Polyurethansystems die Außenschale (i) herstellt und in dem gleichen Arbeitsgang das Lagerelement (ii) haftend mit der Innenbuchse (iii) verbindet.

7. Verfahren gemäß Anspruch 1, **dadurch gekennzeichnet, dass** das Lagerelement (ii) haftend mit einem weiteren elastischen Lagerelement (iv) verbunden ist.

8. Verfahren gemäß Anspruch 7, **dadurch gekennzeichnet, dass** das Lagerelement (iv) zwischen der Außenbuchse (i) und dem Lagerelement (ii) platziert ist, axial über die gesamte Länge des Lagerelementes (ii) reicht und das Lagerelement (ii) nicht vollständig umfasst.

9. Verfahren gemäß Anspruch 7, **dadurch gekennzeichnet, dass** das Lagerelement (iv) zwischen der Innenbuchse (iii) und dem Lagerelement (ii) platziert ist, axial über die gesamte Länge des Lagerelementes (ii) reicht und die Innenbuchse (iii) nicht vollständig umfasst wird.

10. Verfahren gemäß Anspruch 8 oder 9, **dadurch gekennzeichnet, dass** das Lagerelement (iv) in mindestens einer Nut des Lagerelementes (ii) angeordnet ist.

11. Verfahren gemäß Anspruch 7, **dadurch gekennzeichnet, dass** man das Lagerelement (iv) mittels Spritzguss in Kontakt mit dem Lagerelement (ii) herstellt.

12. Verfahren gemäß Anspruch 7, **dadurch gekennzeichnet, dass** man das Lagerelement (iv) als Gießelastomer in Kontakt mit dem Lagerelement (ii) herstellt.

13. Verfahren gemäß Anspruch 1, **dadurch gekennzeichnet, dass** die Außenbuchse eine Dicke zwischen 1 mm und 10 mm aufweist.

14. Verfahren gemäß Anspruch 1, **dadurch gekennzeichnet, dass** man die Oberfläche des Lagerelementes (ii) plasmabehandelt und anschließend das reaktive Polyurethansystem an die vorbehandelte Oberfläche des Lagerelementes angiesst oder anspritzt.

15. Verfahren gemäß Anspruch 1, **dadurch gekennzeichnet, dass** man die Oberfläche des Lagerelementes (ii) mechanisch vorbehandelt und anschließend das reaktive Polyurethansystem an die vorbehandelte Oberfläche des Lagerelementes angiesst oder anspritzt.

16. Lager erhältlich durch ein Verfahren gemäß einem der Ansprüche 1 bis 15.

## Claims

1. A method for producing bearings comprising (i) an outer bushing, (ii) a bearing element based on cellular polyisocyanate polyadducts and (iii) a hollow inner bushing, wherein the outer bushing is produced by casting or injecting a reactive polyurethane system and adhesively bonding it to the bearing element.

2. The method according to claim 1, wherein the outer bushing (i) is produced by reaction injection molding (RIM).

3. The method according to claim 1, wherein the reactive polyurethane system is fiber-reinforced.

4. The method according to claim 1, wherein the bearing element (ii) is produced in contact with the inner bushing, and the outer bushing (i) is then produced in contact with the bearing element (ii).

5. The method according to claim 1, wherein the inner bushing (iii) is placed in the bearing element (ii) and adhesively bonded to it by reaction injection molding (RIM), and the outer bushing (i) is then produced in contact with the bearing element (ii).

6. The method according to claim 1, wherein the outer shell (i) is produced by the casting or injection of the reactive polyurethane system and, in the same operation, the bearing element (ii) is adhesively bonded to the inner bushing (iii).

7. The method according to claim 1, wherein the bearing element (ii) is adhesively bonded to a further resilient bearing element (iv).

8. The method according to claim 7, wherein the bearing element (iv) is placed between the outer bushing (i) and the bearing element (ii), extends axially over the total length of the bearing element (ii) and does not completely surround the bearing element (ii).

9. The method according to claim 7, wherein the bearing element (iv) is placed between the inner bushing (iii) and the bearing element (ii), extends axially over the total length of the bearing element (ii) and does not completely surround the inner bushing (iii).

10. The method according to claim 8 or 9, wherein the bearing element (iv) is arranged in at least one groove of the bearing element (ii).

11. The method according to claim 7, wherein the bearing element (iv) is produced by means of injection molding in contact with the bearing element (ii).

12. The method according to claim 7, wherein the bearing element (iv) is produced as a cast elastomer in contact with the bearing element (ii).

13. The method according to claim 1, wherein the outer bushing has a thickness of from 1 mm to 10 mm.

14. The method according to claim 1, wherein the surface of the bearing element (ii) is plasma-treated and the reactive polyurethane system is then cast or injected onto the pretreated surface of the bearing element.

15. The method according to claim 1, wherein the surface of the bearing element (ii) is mechanically pretreated and the reactive polyurethane system is then cast or injected onto the pretreated surface of the bearing element.

16. A bearing obtainable by a method according to any of claims 1 to 15.

## Revendications

1. Procédé de fabrication de paliers contenant (i) une douille extérieure, (ii) un élément de palier à base de produits de polyaddition de polyisocyanate cellulaires et (iii) une douille intérieure creuse, **caractérisé en ce que** la douille extérieure est fabriquée par coulage ou injection d'un système de polyuréthane réactif et reliée par adhésion avec l'élément de palier.

2. Procédé selon la revendication 1, **caractérisé en ce que** la douille extérieure (i) est fabriquée par moulage par injection réactif (Reaction Injection Moulding, RIM).

3. Procédé selon la revendication 1, **caractérisé en ce que** le système de polyuréthane réactif est renforcé par des fibres.

4. Procédé selon la revendication 1, **caractérisé en ce que** l'élément de palier (ii) est fabriqué en contact avec la douille intérieure, puis la douille extérieure (i) est fabriquée en contact avec l'élément de palier (ii).

5. Procédé selon la revendication 1, **caractérisé en ce que** la douille intérieure (iii) est placée dans l'élément de palier (ii) et reliée par adhésion par moulage par injection réactif (Reaction Injection Moulding, RIM), puis la douille extérieure (i) est fabriquée en contact avec l'élément de palier (ii).

6. Procédé selon la revendication 1, **caractérisé en ce que** l'enveloppe extérieure (i) est fabriquée par le coulage ou l'injection du système de polyuréthane réactif et, lors de la même étape de procédé, l'élément de palier (ii) est relié par adhésion avec la douille intérieure (iii).

7. Procédé selon la revendication 1, **caractérisé en ce que** l'élément de palier (ii) est relié par adhésion avec un élément de palier élastique supplémentaire (iv).

8. Procédé selon la revendication 7, **caractérisé en ce que** l'élément de palier (iv) est placé entre la douille extérieure (i) et l'élément de palier (ii), s'étend axialement sur la longueur totale de l'élément de palier (ii) et n'entoure pas totalement l'élément de palier (ii).

9. Procédé selon la revendication 7, **caractérisé en ce que** l'élément de palier (iv) est placé entre la douille intérieure (iii) et l'élément de palier (ii), s'étend axialement sur la longueur totale de l'élément de palier (ii) et n'entoure pas totalement la douille intérieure (iii).

10. Procédé selon la revendication 8 ou 9, **caractérisé en ce que** l'élément de palier (iv) est placé dans au moins une rainure de l'élément de palier (ii).

11. Procédé selon la revendication 7, **caractérisé en ce que** l'élément de palier (iv) est fabriqué en contact avec l'élément de palier (ii) par moulage par injection.

12. Procédé selon la revendication 7, **caractérisé en ce que** l'élément de palier (iv) est fabriqué en contact avec l'élément de palier (ii) sous la forme d'un élastomère coulé.

13. Procédé selon la revendication 1, **caractérisé en ce que** la douille extérieure présente une épaisseur comprise entre 1 mm et 10 mm.

14. Procédé selon la revendication 1, **caractérisé en ce que** la surface de l'élément de palier (ii) est traitée au plasma, puis le système de polyuréthane réactif est coulé ou injecté sur la surface prétraitée de l'élément de palier.

15. Procédé selon la revendication 1, **caractérisé en ce que** la surface de l'élément de palier (ii) est prétraitée mécaniquement, puis le système de polyuréthane réactif est coulé ou injecté sur la surface prétraitée de l'élément de palier.

16. Palier pouvant être obtenu par un procédé selon l'une quelconque des revendications 1 à 15.
